# FASCICULE DE BREVET EUROPEEN

(11) **EP 2 745 162 B1**
(45) Date de publication et mention de la délivrance du brevet: **18.05.2016**
(21) Numéro de dépôt: 12766274.0
(22) Date de dépôt: 17.08.2012
(51) Int. Cl.: G09G 3/18, G09G 3/34, G02B 27/01

(54) **DISPOSITIF D'AFFICHAGE, NOTAMMENT POUR VÉHICULE AUTOMOBILE**
ANZEIGEVORRICHTUNG, IM BESONDEREN FÜR EIN KRAFTFAHRZEUG
DISPLAY DEVICE, IN PARTICULAR FOR A MOTOR VEHICLE

(30) Priorité: 18.08.2011 DE 102011111015; 04.11.2011 FR 1103347
(43) Date de publication de la demande: 25.06.2014
(73) Titulaire: Johnson Controls Automotive Electronics SAS, 95892 Cergy-Pontoise Cedex (FR)
(72) Inventeur: HERVY, Sébastien, 60240 Liancourt-Saint-Pierre (FR); LOUVIAUX, Nicolas, 60240 Parnes (FR); JOLY-VUILLEMIN, Jean-Christophe, 95300 Pontoise (FR)
(74) Mandataire: Schwöbel, Thilo K.
(86) Numéro de dépôt international: PCT/EP2012/003503
(87) Numéro de publication internationale: WO 2013/023792

(56) Documents cités:
- DE-A1-102009 046 935
- FR-A1- 2 929 017
- JP-A- 10 133 138
- US-A- 5 440 428

## Description

La présente invention concerne un dispositif d'affichage, notamment pour véhicule automobile.

Des dispositifs d'affichage du type tête haute (HUD, head up display) sont connus, notamment avec la projection d'une image vers un pare brise comme décrit dans le document US 5214413 ou dans le document WO 2007/090824 A1 ou dans le document DE 10 2009 046935 A1. Il est avantageux si l'image projetée, du dispositif d'affichage du type tête haute, apparaît ayant des couleurs différentes.

Un inconvénient de tels dispositifs selon l'art connu consiste dans le fait que pour réaliser de tels dispositifs d'affichage, des modules d'affichage sont nécessaires ayant la possibilité d'afficher des couleurs différentes. De tels modules d'affichage ont un prix relativement élevé ce qui fait qu'ils sont utilisés principalement pour des véhicules automobiles de haut de gamme.

La présente invention a notamment pour but de palier aux inconvénients de l'art connu, et notamment ceux cités ci-dessus, et a également pour but de proposer un dispositif d'affichage qui est capable d'afficher des symboles différents, perceptibles par un utilisateur du dispositif d'affichage, les symboles apparaissant ayant des couleurs différentes tout en utilisant un module d'affichage monochrome, c'est à dire un module d'affichage qui ne permet pas intrinsèquement l'affichage de couleurs différentes pour un utilisateur du dispositif d'affichage.

Suivant la présente invention, ce but est atteint par un dispositif d'affichage, notamment pour véhicule automobile, comprenant
- un module de projection et
- un élément de réflexion, l'élément de réflexion étant prévu pour réfléchir au moins partiellement une image provenant du module de projection dans une direction normale de regard d'un utilisateur du dispositif d'affichage,
- le module d'affichage étant un module d'affichage du type monochrome,
- le dispositif d'affichage ayant une zone d'affichage d'un module d'affichage,
- la zone d'affichage comprenant une première partie de la zone d'affichage,
- la zone d'affichage comprenant une deuxième partie de la zone d'affichage,
- le dispositif d'affichage ayant au moins une source de lumière,
caractérisé en ce que le dispositif d'affichage
- est prévu pour afficher un premier symbole dans la première partie de la zone d'affichage, et que le dispositif d'affichage
- est prévu pour afficher un deuxième symbole dans la deuxième partie de la zone d'affichage,
- le premier symbole apparaissant, pour l'utilisateur du dispositif d'affichage, ayant une première couleur, et
- le deuxième symbole apparaissant, pour l'utilisateur du dispositif d'affichage, ayant une deuxième couleur.

De par une telle réalisation d'un dispositif d'affichage, il est avantageusement possible de réduire les coûts associés à un tel dispositif d'affichage tout en réalisant, pour un utilisateur du dispositif d'affichage, une impression d'un fonctionnement multi-couleurs du dispositif d'affichage.

Il est évident, pour un homme du métier, qu'un plus grand nombre que deux parties (première partie de la zone d'affichage et deuxième partie de la zone d'affichage) de la zone d'affichage peuvent exister dans le dispositif d'affichage selon la présente invention, ce qui permet l'affichage d'une pluralité de différents symboles.

L'invention réside également dans le fait que la première partie de la zone d'affichage est le seul endroit d'affichage du premier symbole, et que la deuxième partie de la zone d'affichage est le seul endroit d'affichage du deuxième symbole.

De par une telle réalisation d'un dispositif d'affichage, il est avantageusement possible d'associer de manière permanente différents symboles (ayant normalement des couleurs prédéterminées) à différentes parties de la zone d'affichage.

Un perfectionnement particulièrement préféré de l'invention réside dans le fait que le module d'affichage comprend, dans la zone d'affichage, une couche colorée, la couche colorée étant prévue, dans la première zone d'affichage, d'une première couleur, et la couche colorée étant prévue, dans la deuxième zone d'affichage, d'une deuxième couleur.

De par une telle réalisation d'un dispositif d'affichage, il est avantageusement possible d'utiliser une seule source de lumière rétro-éclairant la première partie de la zone d'affichage ainsi que la deuxième partie de la zone d'affichage tout en réalisant, pour un utilisateur du dispositif d'affichage, des couleurs différentes dans la première partie de la zone d'affichage et dans la deuxième partie de la zone d'affichage.

Un autre perfectionnement préféré de l'invention réside dans le fait que le dispositif d'affichage comprend une première source de lumière, et le dispositif d'affichage comprend une deuxième source de lumière, la première source de lumière rétro-éclairant une première partie de la zone d'affichage, la deuxième source de lumière rétro-éclairant une deuxième partie de la zone d'affichage.

De par une telle réalisation du dispositif d'affichage selon la présente invention, il est avantageusement possible de réaliser, pour un utilisateur du dispositif d'affichage, des couleurs différentes dans la première partie de la zone d'affichage et dans la deuxième partie de la zone d'affichage, sans devoir définir ces couleurs par l'intermédiaire d'une couche colorée qui est colorée d'une première couleur dans la première zone d'affichage, et d'une deuxième couleur dans la deuxième zone d'affichage.

Un perfectionnement particulièrement préféré de l'invention réside dans le fait que la première source de lumière et la deuxième source de lumière se diffèrent quant à la couleur de la lumière émise et/ou quant à l'intensité de la lumière émise.

Encore un autre perfectionnement particulièrement préféré de l'invention réside dans le fait que la première source de lumière et/ou la deuxième source de lumière sont prévues d'être capable de changer la couleur de la lumière émise et/ou l'intensité de la lumière émise.

De par une telle réalisation du dispositif d'affichage selon la présente invention, il est avantageusement possible de réaliser, pour un utilisateur du dispositif d'affichage, des couleurs différentes dans la première partie de la zone d'affichage et dans la deuxième partie de la zone d'affichage de façon dynamique, c'est à dire en réalisant des couleurs qui changent: pendant un premier intervalle de temps, le symbole dans, par exemple, la première partie de la zone d'affichage est affiché ayant une première couleur, et pendant un deuxième intervalle de temps, le symbole dans la première partie de la zone d'affichage est affiché ayant une deuxième couleur (différente de la première couleur). Ainsi, il est avantageusement possible de transmettre, à l'utilisateur du dispositif d'affichage, des informations supplémentaires. Par exemple, il est ainsi possible qu'un symbole (représentant généralement une pompe à essence) est affiché, pendant le premier intervalle de temps, ayant une couleur jaune, et (lorsque de plus en plus de carburant est pris du réservoir de carburant du véhicule automobile sans être rempli) ce symbole est affiché, pendant le deuxième intervalle de temps, ayant une couleur rouge (par exemple).

Un perfectionnement particulièrement préféré de l'invention réside dans le fait que le dispositif d'affichage comprend un module d'affichage du type à cristaux liquides (LCD).

Un autre perfectionnement préféré de l'invention réside dans le fait que la première partie et/ou la deuxième partie de la zone d'affichage correspond à au moins un segment du module d'affichage à cristaux liquides.

Un perfectionnement particulièrement préféré de l'invention réside dans le fait que la première partie et/ou la deuxième partie de la zone d'affichage correspond à seulement un segment du module d'affichage à cristaux liquides.

Un autre perfectionnement préféré de l'invention réside dans le fait que le dispositif d'affichage comprend un module d'affichage du type matriciel.

Un perfectionnement particulièrement préféré de l'invention réside dans le fait que l'élément de réflexion est un élément positionné en écart par rapport à un pare brise du véhicule automobile.

Encore un autre perfectionnement particulièrement préféré de l'invention réside dans le fait que l'élément de réflexion est prévu escamotable entre, d'une part, une position d'utilisation de l'élément de réflexion, et, d'autre part, une position de repos de l'élément de réflexion.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références au dessin schématique annexé, dans lequel :
les figures 1 à 7 sont des vues schématiques du contenu des informations affichées par un dispositif d'affichage selon la présente invention, et
la figure 8 est une vue schématique de section d'un dispositif d'affichage selon la présente invention.

### DESCRIPTION DES DESSINS

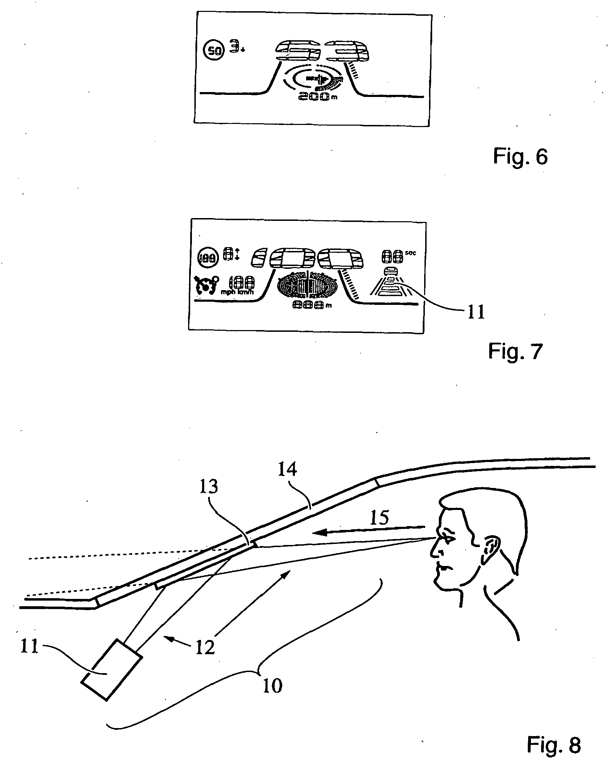

Comme le montre la figure 8 du dessin annexé, un dispositif d'affichage 10 selon la présente invention comprend un module de projection 11 qui génère une image dans la direction normale de regard 15 d'un utilisateur du dispositif d'affichage 10 selon un chemin optique 12. Le chemin optique 12 comprend au moins un élément de réflexion 13. De cette manière, le chemin optique 12 peut comprendre un élément (unique) de réflexion, comme représenté dans la figure 8. Par ailleurs, le chemin optique 12 peut aussi comprendre deux éléments de réflexion (non représenté). Bien évidemment, le dispositif d'affichage 10 peut aussi comprendre - dans une autre variante non représenté dans les figures - plus de deux éléments de réflexion 13.

L'élément de réflexion 13 peut faire partie du pare brise 14 du véhicule. Dans une autre variante préférée de l'invention l'élément de réflexion 3 est un élément positionné relativement proche du pare brise 14, comme c'est représenté dans la figure 8. Dans une autre variante préférée de l'invention (non représentée dans les figures) l'élément de réflexion 13 est un élément positionné nettement en écart par rapport au pare brise 14.

De préférence, l'élément de réflexion 13 peut être prévu escamotable entre, d'une part, une position d'utilisation de l'élément de réflexion 13, et, d'autre part, une position de repos de l'élément de réflexion 13.

La direction normale de regard 15 est la direction de vue d'un utilisateur du dispositif d'affichage 10, notamment un conducteur de véhicule, lorsque celui-ci regarde, notamment à travers le pare brise 14, l'extérieur du véhicule automobile qui se trouve par exemple devant le véhicule.

Le dispositif d'affichage 10 selon la présente invention comprend, de préférence dans le module de projection 11, un module d'affichage étant un module d'affichage du type monochrome. Le module d'affichage peut être un module d'affichage du type à cristaux liquides (LCD, en anglais: Liquid Crystal Display). Par ailleurs, le module d'affichage peut aussi être un module d'affichage du type matriciel. Il est aussi possible, selon la présente invention, de combiner un module d'affichage du type à cristaux liquides (LCD) avec un module d'affichage du type matriciel, c'est à dire d'utiliser un module d'affichage combiné comprenant une partie du module d'affichage du type à cristaux liquides et une partie du module d'affichage du type matriciel. Selon la présente invention, dans le cas d'un module d'affichage du type matriciel, il est préféré d'utiliser un module d'affichage du type à matrice passive.

Le dispositif d'affichage 10 (et ainsi le module d'affichage) comprend une zone d'affichage qui comprend une première partie de la zone d'affichage, et une deuxième partie de la zone d'affichage. Le dispositif d'affichage 10 comprend, au moins une source de lumière et permet d'afficher un premier symbole dans la première partie de la zone d'affichage, et un deuxième symbole dans la deuxième partie de la zone d'affichage, le premier symbole apparaissant, pour l'utilisateur du dispositif d'affichage, ayant une première couleur, et le deuxième symbole apparaissant, pour l'utilisateur du dispositif d'affichage, ayant une deuxième couleur.

Selon un premier mode de réalisation, cette fonctionnalité peut être réalisée, en utilisant une seule source de lumière pour la première partie de la zone d'affichage et la deuxième partie de la zone d'affichage, par l'intermédiaire d'une couche colorée dans la zone d'affichage, la couche colorée étant prévue, dans la première zone d'affichage, d'une première couleur, et la couche colorée étant prévue, dans la deuxième zone d'affichage, d'une deuxième couleur. La couche colorée peut être réalisée, par exemple, par l'intermédiaire d'une vitre ou d'un film imprimé.

Selon un deuxième mode de réalisation de la présent invention, cette fonctionnalité peut aussi être réalisée, en utilisant une première source de lumière et une deuxième source de lumière, la première source de lumière rétro-éclairant la première partie de la zone d'affichage, et la deuxième source de lumière rétro-éclairant la deuxième partie de la zone d'affichage.

Selon encore un mode réalisation de la présente invention, cette fonctionnalité peut aussi être réalisée, en combinant le premier mode de réalisation avec le deuxième mode de réalisation, c'est à dire
- par l'intermédiaire d'une couche colorée dans la zone d'affichage, la couche colorée étant prévue, dans la première zone d'affichage, d'une première couleur, et la couche colorée étant prévue, dans la deuxième zone d'affichage, d'une deuxième couleur, et
- en utilisant une première source de lumière et une deuxième source de lumière, la première source de lumière rétro-éclairant la première partie de la zone d'affichage, et la deuxième source de lumière rétro-éclairant la deuxième partie de la zone d'affichage.

Il est évident que la lumière blanche est aussi bien considérée "une couleur" de la lumière émise de la source de lumière ou d'une des sources de lumière que d'autres couleurs, comme le jaune, le rouge, le bleu, le vert, etc.

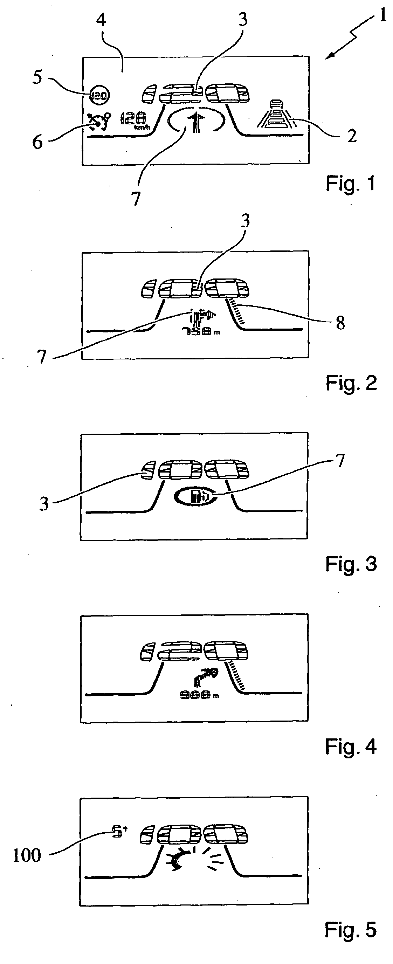

Dans les figures 1 à 7, différentes vues du contenu des informations affichées par un dispositif d'affichage selon la présente invention sont schématiquement représentées.

La figure 1 montre un premier exemple d'une vue que réalise un dispositif d'affichage 10 selon la présente invention pour un utilisateur, notamment le conducteur d'un véhicule automobile. Par exemple, le dispositif d'affichage 10 comprend un module d'affichage du type à cristaux liquides (LCD) qui est couvert par un vitre (notamment un vitre à verre). Le module d'affichage du type à cristaux liquides (LCD) est rétro-éclairé à l'aide d'au moins une source de lumière, de préférence à l'aide de plusieurs sources de lumière, notamment un ou plusieurs diodes électroluminescentes (LED, en anglais: Light Emitting Diode) ou alors un ou plusieurs diodes électroluminescentes organiques (OLED, en anglais: Organic Light Emitting Diode). Dans l'exemple représenté, la zone d'affichage comprend six différentes parties, c'est à dire une première partie 2 de la zone d'affichage, une deuxième partie 3 de la zone d'affichage, une troisième partie 4 de la zone d'affichage, une quatrième partie 5 de la zone d'affichage, une cinquième partie 6 de la zone d'affichage, et une sixième partie 7 de la zone d'affichage. Dans l'exemple représenté, chacune des parties 2, 3, 4, 5, 6, 7 de la zone d'affichage est rétro-éclairé par l'intermédiaire d'au moins une source de lumière, notamment une diode électroluminescente (LED), et notamment de manière colorée. Les deuxième et sixième parties 3, 7 de la zone d'affichage, affichant dans l'exemple la vitesse momentanée et une information d'un système de navigation, sont rétro-éclairés avec de la lumière blanche, et il s'agit d'un module d'affichage ou de plusieurs modules d'affichage du type matriciel, notamment du type de matrice passive. Les première, troisième, quatrième, et cinquième parties 2, 4, 5, 6 de la zone d'affichage sont rétro-éclairés avec de la lumière non-blanche (jaune/orange, rouge, verte).

Dans l'exemple représenté dans la figure 2, des parties supplémentaires 8, 9 de la zone d'affichage sont représentées. Il s'agit d'un module d'affichage du type matriciel, notamment du type de matrice passive, affichant notamment également des informations du système de navigation dans une couleur jaune/orange.

Dans l'exemple représenté dans la figure 3, dans la sixième partie 7 de la zone d'affichage, il est affiché une information sur l'état d'opération du véhicule automobile, dans l'exemple la nécessité de prendre de l'essence.

Dans les exemples des figures 2 et 4, la vitesse momentanée du véhicule automobile est représentée, notamment à l'aide d'un diagramme à barres, également dans la partie supplémentaire 8 de la zone d'affichage. Dans un tel diagramme à barres, la longueur des barres (ou le nombre de barres identiques et se succédant) donne une indication de la vitesse momentanée du véhicule automobile.

Dans l'exemple représenté dans la figure 5, une autre partie supplémentaire 10 de la zone d'affichage est représentée, affichant notamment une information du système d'information et de divertissement.

Dans les exemples représentés dans les figures 6 et 7, d'autres exemples du dispositif d'affichage 10 selon la présente invention sont représentés, notamment avec une autre partie supplémentaire 11 de la zone d'affichage, à l'aide de laquelle encore d'autres informations peuvent être affichées.

## Revendications

1. Dispositif d'affichage (10), notamment pour véhicule automobile, comprenant
-- un module de projection (11) et
-- un élément de réflexion (13), l'élément de réflexion (13) étant prévu pour réfléchir au moins partiellement une image provenant du module de projection (11) dans une direction normale de regard (15) d'un utilisateur du dispositif d'affichage,
-- un module d'affichage
-- le dispositif d'affichage (10) ayant une zone d'affichage d'un module d'affichage,
-- la zone d'affichage comprenant une première partie de la zone d'affichage,
-- la zone d'affichage comprenant une deuxième partie de la zone d'affichage,
-- le dispositif d'affichage (10) ayant au moins une source de lumière, où le dispositif d'affichage (10)
-- est prévu pour afficher un premier symbole dans la première partie de la zone d'affichage, et que le dispositif d'affichage (10)
-- est prévu pour afficher un deuxième symbole dans la deuxième partie de la zone d'affichage,
-- le premier symbole apparaissant, pour l'utilisateur du dispositif d'affichage, ayant une première couleur, et
-- le deuxième symbole apparaissant, pour l'utilisateur du dispositif d'affichage, ayant une deuxième couleur, et
**caractérisé en ce que** ledit module d'affichage est du type monochrome, et **en ce que** la première partie de la zone d'affichage est le seul endroit d'affichage du premier symbole, et que la deuxième partie de la zone d'affichage est le seul endroit d'affichage du deuxième symbole.

2. Dispositif d'affichage (10) selon la revendication 1, **caractérisé en ce que** le module d'affichage comprend, dans la zone d'affichage, une couche colorée, la couche colorée étant prévue, dans la première zone d'affichage, d'une première couleur, et la couche colorée étant prévue, dans la deuxième zone d'affichage, d'une deuxième couleur.

3. Dispositif d'affichage (10) selon l'une quelconque des revendications précédentes, **caractérisé en ce que** le dispositif d'affichage (10) comprend une première source de lumière, et le dispositif d'affichage (10) comprend une deuxième source de lumière, la première source de lumière rétro-éclairant la première partie de la zone d'affichage, la deuxième source de lumière rétro-éclairant la deuxième partie de la zone d'affichage.

4. Dispositif d'affichage (10) selon l'une quelconque des revendications précédentes, **caractérisé en ce que** la première source de lumière et la deuxième source de lumière se diffèrent quant à la couleur de la lumière émise et/ou quant à l'intensité de la lumière émise.

5. Dispositif d'affichage (10) selon l'une quelconque des revendications précédentes, **caractérisé en ce que** la première source de lumière et/ou la deuxième source de lumière sont prévues d'être capable de changer la couleur de la lumière émise et/ou l'intensité de la lumière émise.

6. Dispositif d'affichage (10) selon l'une quelconque des revendications précédentes, **caractérisé en ce que** la première source de lumière et la deuxième source de lumière se diffèrent quant à la couleur de la lumière émise et/ou quant à l'intensité de la lumière émise.

7. Dispositif d'affichage (10) selon l'une quelconque des revendications précédentes, **caractérisé en ce que** le dispositif d'affichage (10) comprend un module d'affichage du type à cristaux liquides (LCD).

8. Dispositif d'affichage (10) selon l'une quelconque des revendications précédentes, **caractérisé en ce que** la première partie et/ou la deuxième partie de la zone d'affichage correspond à au moins un segment du module d'affichage à cristaux liquides.

9. Dispositif d'affichage (10) selon l'une quelconque des revendications précédentes, **caractérisé en ce que** le dispositif d'affichage (10) comprend un module d'affichage du type matriciel.

10. Dispositif d'affichage (10) selon l'une quelconque des revendications précédentes, **caractérisé en ce que** l'élément de réflexion (13) est un élément positionné en écart par rapport à un pare brise (14) du véhicule automobile.

## Patentansprüche

1. Anzeigevorrichtung (10), insbesondere für Kraftfahrzeug, umfassend:
- ein Projektionsmodul (11) und
- ein Reflexionselement (13), wobei das Reflexionselement (13) vorgesehen ist, um ein von dem Projektionsmodul (11) stammendes Bild mindestens teilweise in einer normalen Blickrichtung (15) eines Benutzers der Anzeigevorrichtung zu reflektieren,
- ein Anzeigemodul,
- wobei die Anzeigevorrichtung (10) eine Anzeigezone eines Anzeigemoduls aufweist,
- wobei die Anzeigezone einen ersten Teil der Anzeigezone umfasst,
- wobei die Anzeigezone einen zweiten Teil der Anzeigezone umfasst,
- wobei die Anzeigevorrichtung (10) mindestens eine Lichtquelle aufweist,
wobei die Anzeigevorrichtung (10)
- vorgesehen ist, um ein erstes Symbol in dem ersten Teil der Anzeigezone anzuzeigen, und die Anzeigevorrichtung (10)
- vorgesehen ist, um ein zweites Symbol in dem zweiten Teil der Anzeigezone anzuzeigen,
- wobei das erste erscheinende Symbol für den Benutzer der Anzeigevorrichtung eine erste Farbe hat und
- wobei das zweite erscheinende Symbol für den Benutzer der Anzeigevorrichtung eine zweite Farbe hat, und
**dadurch gekennzeichnet, dass** das Anzeigemodul des monochromen Typs ist, dass der erste Teil der Anzeigezone der einzige Anzeigeort des ersten Symbols ist und dass der zweite Teil der Anzeigezone der einzige Anzeigeort des zweiten Symbols ist.

2. Anzeigevorrichtung (10) nach Anspruch 1, **dadurch gekennzeichnet, dass** das Anzeigemodul in der Anzeigezone eine gefärbte Schicht umfasst, wobei die gefärbte Schicht in der ersten Anzeigezone eine erste Farbe hat und wobei die gefärbte Schicht in der zweiten Anzeigezone eine zweite Farbe hat.

3. Anzeigevorrichtung (10) nach einem der vorhergehenden Ansprüche, **dadurch gekennzeichnet, dass** die Anzeigevorrichtung (10) eine erste Lichtquelle umfasst und die Anzeigevorrichtung (10) eine zweite Lichtquelle umfasst, wobei die erste Lichtquelle den ersten Teil der Anzeigezone hinterleuchtet, wobei die zweite Lichtquelle den zweiten Teil der Anzeigezone hinterleuchtet.

4. Anzeigevorrichtung (10) nach einem der vorhergehenden Ansprüche, **dadurch gekennzeichnet, dass** die erste Lichtquelle und die zweite Lichtquelle sich hinsichtlich der Farbe des emittierten Lichts und/oder hinsichtlich der Stärke des emittierten Lichts unterscheiden.

5. Anzeigevorrichtung (10) nach einem der vorhergehenden Ansprüche, **dadurch gekennzeichnet, dass** die erste Lichtquelle und/oder die zweite Lichtquelle vorgesehen sind, um die Farbe des emittierten Lichts und/oder die Stärke des emittierten Lichts verändern zu können.

6. Anzeigevorrichtung (10) nach einem der vorhergehenden Ansprüche, **dadurch gekennzeichnet, dass** die erste Lichtquelle und die zweite Lichtquelle sich hinsichtlich der Farbe des emittierten Lichts und/oder hinsichtlich der Stärke des emittierten Lichts unterscheiden.

7. Anzeigevorrichtung (10) nach einem der vorhergehenden Ansprüche, **dadurch gekennzeichnet, dass** die Anzeigevorrichtung (10) ein Anzeigemodul des Flüssigkristall-(LCD)-Typs ist.

8. Anzeigevorrichtung (10) nach einem der vorhergehenden Ansprüche, **dadurch gekennzeichnet, dass** der erste Teil und/oder der zweite Teil der Anzeigezone mindestens einem Segment des Flüssigkristall-Anzeigemoduls entspricht.

9. Anzeigevorrichtung (10) nach einem der vorhergehenden Ansprüche, **dadurch gekennzeichnet, dass** die Anzeigevorrichtung (10) ein Anzeigemodul des Matrix-Typs umfasst.

10. Anzeigevorrichtung (10) nach einem der vorhergehenden Ansprüche, **dadurch gekennzeichnet, dass** das Reflexionselement (13) ein Element ist, das relativ zu einer Windschutzscheibe (14) des Kraftfahrzeugs beabstandet angeordnet ist.

## Claims

1. Display device (10), in particular for a motor vehicle, comprising
- a projection module (11) and
- a reflection element (13), the reflection element (13) being provided to reflect an image from the projection module (11) at least in part in a normal viewing direction (15) of a user of the display device,
- a display module
- the display device (10) having a display region of a display module,
- the display region comprising a first part of the display region,
- the display region comprising a second part of the display region,
- the display device (10) having at least one light source,
the display device (10)
- being provided to display a first symbol in the first part of the display region, and the display device (10)
- being provided to display a second symbol in the second part of the display region,
- the first symbol appearing to the user of the display device to be of a first colour, and
- the second symbol appearing to the user of the display device to be of a second colour, and **characterised in that** said display module is monochrome and **in that** the first part of the display region is the only display location of the first symbol and **in that** the second part of the display device is the only display location of the second symbol.

2. Display device (10) according to claim 1, **characterised in that** the display module comprises, in the display zone, a coloured layer, the coloured layer being provided with a first colour in the first display region and the coloured layer being provided with a second colour in the second display region.

3. Display device (10) according to either of the preceding claims, **characterised in that** the display device (10) comprises a first light source and the display device (10) comprises a second light source, the first light source backlighting the first part of the display region, the second light source backlighting the second part of the display region.

4. Display device (10) according to any of the preceding claims, **characterised in that** the first light source and the second light source differ in the colour of light emitted and/or in the intensity of light emitted.

5. Display device (10) according to any of the preceding claims, **characterised in that** the first light source and/or the second light source are provided so as to be able to change the colour of light emitted and/or the intensity of light emitted.

6. Display device (10) according to any of the preceding claims, **characterised in that** the first light source and the second light source differ in the colour of light emitted and/or in the intensity of light emitted.

7. Display device (10) according to any of the preceding claims, **characterised in that** the display device (10) comprises a liquid crystal (LCD) display module.

8. Display device (10) according to any of the preceding claims, **characterised in that** the first part and/or the second part of the display device corresponds to at least one segment of the liquid crystal display module.

9. Display device (10) according to any of the preceding claims, **characterised in that** the display device (10) comprises a dot-matrix display module.

10. Display device (10) according to any of the preceding claims, **characterised in that** the reflection element (13) is an element positioned at a distance from a windscreen (14) of the motor vehicle.
